(19)

Europäisches
Patentamt
European
Patent Office
Office européen
des brevets

(11) EP 4 610 595 A1

(12) EUROPEAN PATENT APPLICATION

(43) Date of publication:
03.09.2025 Bulletin 2025/36

(21) Application number: 24161026.0

(22) Date of filing: 01.03.2024

(51) International Patent Classification (IPC):
G01C 21/16 (2006.01)       G06F 3/03 (2006.01)

(52) Cooperative Patent Classification (CPC):
G01C 21/165; G06F 3/0321; G06F 3/03542;
G01C 21/188

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Freshape SA
1020 Renens (CH)

(72) Inventors:
• TOURNERY, Christophe
1020 Renens (CH)
• GUÉRIN, Guillaume
1020 Renens (CH)

(74) Representative: ABREMA SA
Avenue du Théâtre 16
1005 Lausanne (CH)

(54) METHOD OF ESTIMATING A STATE OF A SYSTEM BASED ON SENSOR FUSION OF ASYNCHRONOUS SENSOR DATA

(57) There is described a method of estimating a state of a system (100) based on sensor fusion of sensor data provided by a first sensing system (S1) delivering absolute measurement samples at a first frequency $F_1$ and sensor data provided by at least a second sensing system (S2) delivering relative measurement samples at a second frequency $F_2$ higher than the first frequency $F_1$, the absolute measurement samples being delivered with a time delay $\Delta t$ relative to the relative measurement samples. The method includes applying interrelated first and second dead reckoning algorithms ($ALG1_H$, $ALG1_T$) to integrate over time the relative measurement samples to respectively provide a current estimation and a prior estimation of the state of the system, a state (State - Head) of the first dead reckoning algorithm ($ALG1_H$) representing the estimated state of the system (100) at a current time t, while a state (State - Tail) of the second dead reckoning algorithm ($ALG1_T$) represents the estimated state of the system (100) at a prior time $t - \Delta t$. Sensor fusion is carried out by means of a sensor fusion algorithm (ALG2) that is executed at the first frequency $F_1$ based on the absolute measurement samples and samples of the prior estimation of the state of the system (100) provided by the second dead reckoning algorithm ($ALG1_T$), the state (State - Tail) of the second dead reckoning algorithm ($ALG1_T$) being periodically cor- rected based on the fused output of the sensor fusion algorithm (ALG2) and used to periodically update the state (State - Head) of the first dead reckoning algorithm ($ALG1_H$). The method is designed to provide a current estimation of the state of the system (100) at high fre- quency and with minimal output latency despite the time delay $\Delta t$ and asynchronous nature of the sensor data.

Fig. 3

**Description**

TECHNICAL FIELD

The present invention generally relates to a method of estimating a state of a system, such as but not limited to estimation of a pose and/or location of a positioning or navigational device, based on sensor fusion of asynchronous sensor data.

BACKGROUND OF THE INVENTION

Sensor fusion is applied in a variety of fields and is widely used in the technical literature to refer to a variety of techniques, technologies, systems and application which employ and/or combine data derived from multiple information sources, including multiple sensing systems. Applications of sensor fusion range from real-time fusion of sensor information for e.g. positioning or navigational purposes to the off-line fusion of both human and technical strategic intelligence data. An overview of sensor fusion principles may be found in *"Fusion or confusion: knowledge or nonsense"*, Peter L. Rothman et al., Proceedings of the SPIE, Volume 1470, Data Structures and Target Classification, pp. 2-12, August 1991 (https://doi.org/doi:10.1117/12.44835), referred to herein as **[Rothman1991].**

Positional fusion techniques are of particular interest. Positional fusion attempts to combine parametric data from multiple sensor sources to determine an entity's location, pose and/or velocity. Positional fusion is especially used to combine sensor data from multiple sources to derive a single fused output providing an estimation of the entity's pose and/or location and, possibly, of the entity's kinematics.

When combining sensor data from multiple different sensor sources using sensor fusion, one is typically faced with issues relating to the fact that all sensor sources may not deliver measurement samples in real-time and in synchronism, but with a certain time delay that can be different for each sensor. In such case, one is therefore typically led to implement measures to compensate for the relevant time delay and ensure adequate synchronization between the flow of sensor data.

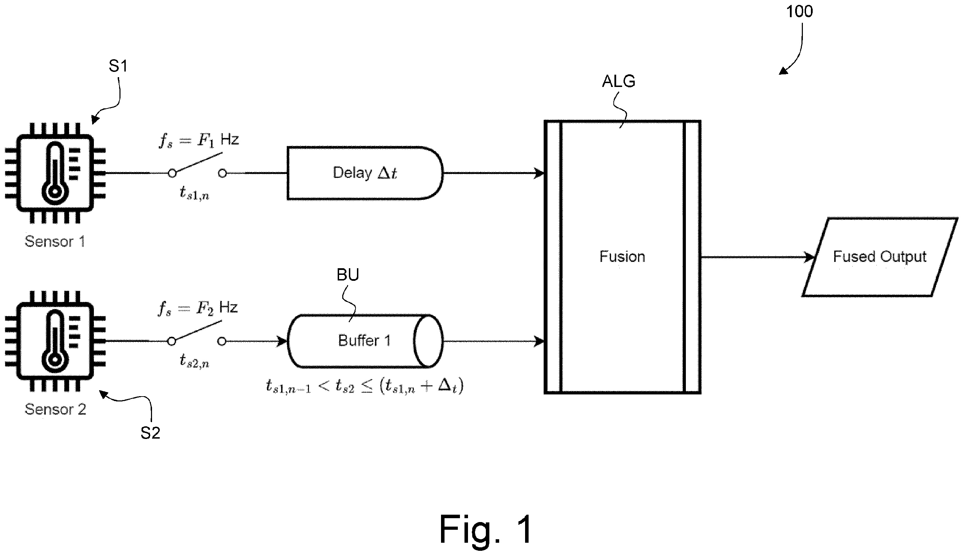

Figure 1 is a schematic illustration of a sensor fusion system 100 showing fusion of measurement samples delivered by two sensing systems S1, S2 with compensation of sensor delay. More specifically, the first sensing system S1 (which may for instance be a positioning or navigation system including a satellite-based navigation system - such as but not limited to a GPS - or an optical sensing system configured to provide an absolute estimation of a location and/or pose of a positioning or navigational device) is schematically illustrated as operating at a first frequency $F_1$ to periodically deliver (absolute) measurement samples with a given delay $\Delta t$. This delay $\Delta t$ may be due to processing time, transmission lines or any other reason susceptible of causing a delay. The second sensing system S2 (which may for instance be an inertial measurement unit configured to provide relative measurement samples indicative of a change in the location and/or pose of the positioning or navigational device) is schematically illustrated as operating at a second frequency $F_2$ to periodically deliver (relative) measurement samples. In the illustrated example, the samples provided by the sensing system S2 are assumed to be provided with no delay, which is not the case in practice as some delay will always be present in practice. The overall system 100 can however be reduced to the assumption depicted in Figure 1 by subtracting the delay in the delivery of the relative measurement samples from the comparatively longer delay in the delivery of the absolute measurement samples.

Assuming that frequencies $F_1$ and $F_2$ are identical, a simple buffering mechanism (identified in Figure 1 by a buffer BU) may be implemented to artificially delay the measurement samples delivered by the second sensing system S2 by an amount corresponding to delay $\Delta t$, thereby synchronizing the relevant samples before being fed to the relevant sensor fusion algorithm ALG.

In the illustration of Figure 1, one will appreciate that the result of the sensor fusion algorithm ALG, i.e. the fused output representative of the state of the system 100, e.g. the estimation of the location and/or pose of the positioning or navigational device, will also be delayed by at least $\Delta t$, it being understood that the sensor fusion algorithm ALG will also lead to an additional delay due to the processing time required to execute the sensor fusion algorithm ALG. In certain applications, the relevant delay may be acceptable, but other applications may specifically require lower latency.

In practice, the frequencies $F_1$, $F_2$ at which the sensing systems S1, S2 operate are not necessarily identical. Especially, due to various constraints (including processing and power requirements, which are inevitable from a practical perspective, especially when it comes to implementing a solution for portable or mobile applications), the first sensing system S1 shown in Figure 1 would be operating at a first frequency $F_1$ that is lower than that of the second frequency $F_2$ at which the second sensing system S2 is operating. This is particularly the case in e.g. so-called inertial navigation systems (INS) where the first sensing system S1 is supplemented by a second sensing system S2 in the form of an inertial navigation unit (IMU) that operates at a frequency $F_2$ far higher than the first frequency $F_1$ at which the first sensing system S1 operates. In such case, the inertial navigation unit (IMU) is exploited to provide an estimation of a change in the location and/or pose of the positioning or navigational device between two successive absolute measurement samples provided by the first sensing system S1.

Alternative solutions to ensure time synchronization of sensor data from multiple sources have been proposed for state estimation. For example, in "Update with Out-of-Sequence Measurements in Tracking: Exact Solution", Yaakov Bar-Shalom, IEEE Transactions on Aerospace and Electronic Systems, Volume 38, Issue 3, pp. 769-777, July 2002 (https://doi.org/10.1 109/TAES.2002.1039398) - herein referred to as **[Bar-Shalom2002]** - and "Advances in Asynchronous and Decentralized Estimation", Mahendra Mallick et al., 2001 IEEE Aerospace Conference Proceedings (Cat. No.01TH8542), Volume 4, pp. 1873-1888, March 10-17, 2001 (https://doi.org/10.1109/AERO.2001.931505) - herein referred to as **[Mallick2001]** - the authors present techniques to predict the state of the system at some point in the past in order to consider delayed measurements. These however do not cover the case of non-linear estimation and can be computationally expensive, and the computational cost may itself introduce some delay.

Further measures are therefore required to cope with the differences in sensor data output frequencies before the sensor data can be fed to the sensor fusion algorithm, especially with a view to reduce latency of the system.

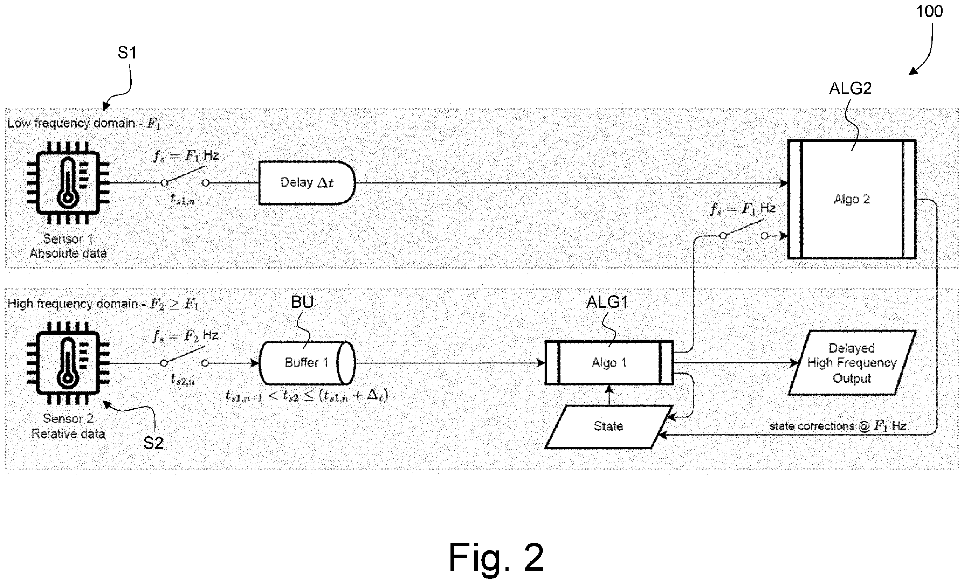

Figure 2 is a schematic illustration of another sensor fusion system 100 showing fusion of absolute and relative measurement samples delivered by two asynchronous sensing systems S1, S2. In the context of Figure 2, it is assumed that the first sensing system S1 is sampled at a relatively low frequency $F_1$ and that the absolute measurement samples are available with a certain delay $\Delta t$. The second sensing system S2, on the other hand, is sampled at a higher frequency $F_2$ and the relative measurement samples are available with almost no delay. As discussed with reference to Figure 1, and without loss of generality, the second sensing system S2 can be assumed to have zero delay (any delay in the delivery of the relative measurement samples being once again subtractable from the delay of the first sensing system S1).

The system 100 shown schematically in Figure 2 is typical of an inertial navigation system (INS), but any other system involving the combination of absolute and relative sensing systems S1, S2 can be envisioned. Absolute sensing systems may for instance include GPS, RADAR, LIDAR, cameras, absolute position encoders, and the like. Relative sensing systems may include for instance inertial measurement units (IMUs), optical flow sensors, relative encoders, and the like.

In the case of Figure 2, given an initial known state (e.g. a known location or pose estimation of the positioning or navigational device) at time $t_0$, a dead reckoning (or deduced reckoning) algorithm can be implemented to estimate the state at a subsequent time, e.g. by integrating the relative measurement samples delivered by an inertial measurement unit (IMU) of the second sensing system S2, following buffering thereof in the buffer BU. This dead reckoning algorithm is identified by reference sign ALG1 in Figure 2 and in essence consists in integrating the relevant relative measurement samples on top of the most recent state estimation as last provided at the output of the sensor fusion algorithm ALG2, which may for instance be implemented as an Error-State Extended Kalman Filter (ES-EKF). In such case, the estimated state of the system 100 is constantly updated by the dead reckoning algorithm ALG1, as relative measurement samples are integrated, and a new, corrected state (e.g. a new location or pose estimation) is refreshed and provided at frequency $F_1$, from the fused output of the sensor fusion algorithm ALG2, to be used as new input for the dead reckoning algorithm ALG1. Integration of the relative measurement samples by the dead reckoning algorithm ALG1 can then be carried out on top of this new, refreshed state.

As result of the implementation of Figure 2, the dead reckoning algorithm ALG1 provides a high-frequency output of the estimation of the state of the system 100, namely at frequency $F_2$, however such output is still impacted by the inherent delay $\Delta t$ in the delivery of the measurement samples from the first sensing system S1 and the added delay caused by the sensor fusion algorithm ALG2.

There is therefore a need for an improved solution that allows to provide estimates of the state of the system with reduced or even minimal latency.

SUMMARY OF THE INVENTION

A general aim of the invention is to provide a method of estimating a state of a system based on sensor fusion of asynchronous sensor data that obviates the shortcomings and limitations of the known solutions of the prior art.

More specifically, an aim of the present invention is to provide such a method that allows as much as possible to reduce output latency.

A further aim of the invention is to provide such a solution that can adequately be implemented, especially, for the purpose of estimating a pose or location of a positioning or navigational device, including but not limited to estimating the pose of a digital pen or stylus device.

These aims, and others, are achieved thanks to the solutions defined in the claims.

There is accordingly provided a method of estimating a state of a system based on sensor fusion of asynchronous sensor data, the features of which are recited in claim 1, namely a method of estimating a state of a system based on sensor fusion of sensor data provided by a first sensing system delivering absolute measurement samples at a first frequency $F_1$ and sensor data provided by at least a second sensing system delivering relative measurement samples at a second frequency $F_2$ higher than the first frequency $F_1$, the absolute measurement samples being delivered with a time delay $\Delta t$

relative to the relative measurement samples. The method includes applying interrelated first and second dead reckoning algorithms to integrate over time the relative measurement samples to respectively provide a current estimation and a prior estimation of the state of the system, a state of the first dead reckoning algorithm representing the estimated state of the system at a current time $t$, while a state of the second dead reckoning algorithm represents the estimated state of the system at a prior time $t - \Delta t$. Sensor fusion is carried out by means of a sensor fusion algorithm that is executed at the first frequency $F_1$ based on the absolute measurement samples and samples of the prior estimation of the state of the system provided by the second dead reckoning algorithm, the state of the second dead reckoning algorithm being periodically corrected based on the fused output of the sensor fusion algorithm and used to periodically update the state of the first dead reckoning algorithm.

By way of preference, the method further includes providing a first buffer and feeding the relative measurement samples to the first buffer to store buffered samples for a duration corresponding to the time delay $\Delta t$, as well as providing a second buffer to additionally store relative measurement samples between two successive absolute measurement samples. In such case, the second dead reckoning algorithm integrates over time the relative measurement samples stored by the second buffer. Moreover, the method further includes triggering a reset procedure once the state of the second dead reckoning algorithm has been corrected based on the fused output of the sensor fusion algorithm, which reset procedure includes (i) resetting the state of the first dead reckoning algorithm to correspond to the corrected state of the second dead reckoning algorithm, (ii) filling the second buffer with the buffered samples from the first buffer, and (iii) integrating the buffered samples stored by the first buffer using the first dead reckoning algorithm to realign the state of the first dead reckoning algorithm to the current time $t$.

The invention allows estimation of the state of the system with minimal output latency, which is particularly advantageous for all applications and implementations requiring fast estimation of the state of the system, especially for positioning or navigational purposes.

Further embodiments of the invention form the subject-matter of the dependent claims and are discussed more extensively hereafter. Sensor fusion is in particular contemplated for the purpose of estimating the current pose of an optical positioning device, including but not limited to a digital pen or stylus device, in which case the optical positioning device incorporates an optical sensing system acting as the first sensing system to carry out optical measurements of the surrounding environment and provide an estimation of the pose of the optical positioning device within the surrounding environment based on the optical measurements carried out by the optical sensing system, the optical sensing system being supplemented by an inertial measurement unit configured to carry out inertial measurements and provide an estimation of a change in the pose and/or location of the positioning or navigational device.

Also claimed is an inertial navigation device comprising a navigation system configured to determine an estimation of the pose and/or location of the inertial navigation device within a surrounding environment, the inertial navigation device further comprising an inertial measurement unit configured to carry out inertial measurements and provide an estimation of a change in the pose and/or location of the inertial navigation device. The inertial navigation device further comprises a processing system configured to estimate the pose and/or location of the inertial navigation device in accordance with the method of the invention.

There is further claimed a digital pen or stylus device comprising an optical sensing system configured to acquire images of at least a portion of a target surface over which the digital pen or stylus device is moved, the target surface being provided with a plurality of positional markers that are distributed over the target surface, the digital pen or stylus device further comprising an inertial measurement unit configured to carry out inertial measurements and provide an estimation of a change in the pose of the digital pen or stylus device. The digital pen or stylus device further comprises a processing system configured to estimate the pose of the digital pen or stylus device in accordance with the method of the invention.

Further advantageous embodiments of the invention are discussed below.

BRIEF DESCRIPTION OF THE DRAWINGS

Other features and advantages of the present invention will appear more clearly from reading the following detailed description of embodiments of the invention which are presented solely by way of non-restrictive examples and illustrated by the attached drawings in which:

Figure 1 is a schematic illustration of a sensor fusion system showing fusion of measurement samples delivered by two sensing systems, with compensation of sensor delay;

Figure 2 is a schematic illustration of a sensor fusion system showing fusion of absolute and relative measurement samples delivered by two asynchronous sensing systems;

Figure 3 is a schematic illustration of a sensor fusion system according to a preferred embodiment of the invention, showing fusion of absolute and relative measurement samples delivered by two asynchronous sensing systems, with compensation of sensor delay and minimal output latency;

Figure 4 is a schematic illustration of an optical stylus or pen device embodying the invention in accordance with a preferred application scenario; and

Figure 5 is a schematic diagram illustrating a preferred measurement model for pose estimation of the camera as applied in the context of the preferred application scenario of Figure 4.

DETAILED DESCRIPTION OF EMBODIMENTS OF THE INVENTION

The present invention will be described in relation to various illustrative embodiments. It shall be understood that the scope of the invention encompasses all combinations and sub-combinations of the features of the embodiments disclosed herein as defined by the appended claims.

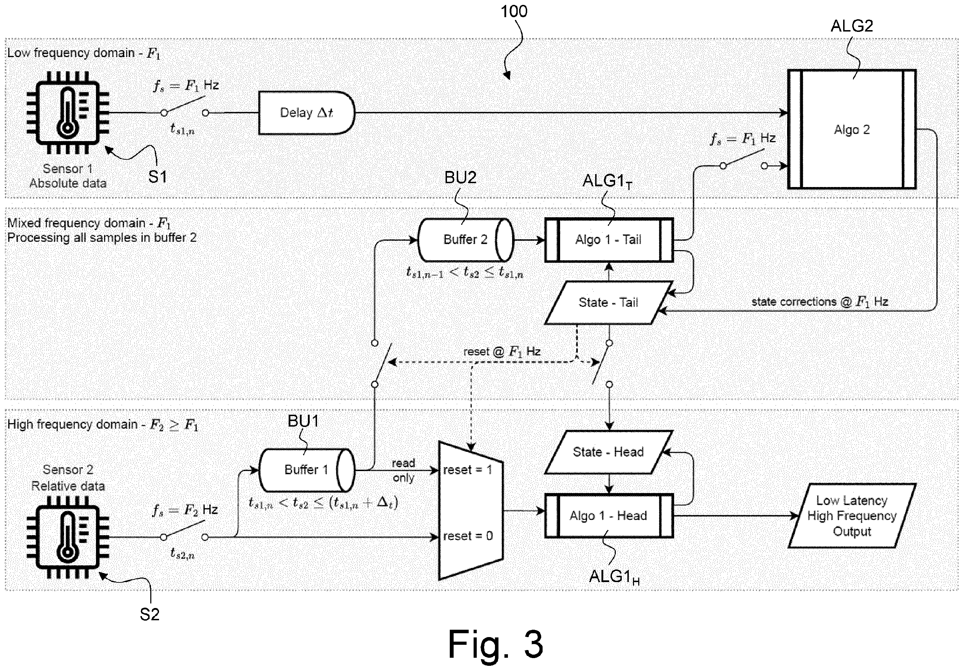

Figure 3 is a schematic illustration of a sensor fusion system 100 according to a preferred embodiment of the invention, showing fusion of absolute and relative measurement samples delivered by two asynchronous sensing systems S1, S2 operating at different frequencies $F_1$, $F_2$, with compensation of sensor delay and minimal output latency.

According to the invention, interrelated first and second dead reckoning algorithms, designated $ALG1_H$, $ALG1_T$, are applied to integrate over time the relative measurement samples delivered by the second sensing system S2 to respectively provide a current estimation and a prior estimation of the state of the system. More specifically, a state, designated "State - Head", of the first dead reckoning algorithm $ALG1_H$ represents the estimated state of the system 100 at a current time $t$, while a state, designated "State - Tail", of the second dead reckoning algorithm $ALG1_T$ represents the estimated state of the system 100 at a prior time $t - \Delta t$. Sensor fusion is carried out by means of a sensor fusion algorithm ALG2, which may be implemented as an Error-State Extended Kalman Filter (ES-EKF) that is executed at the first frequency $F_1$ based on the absolute measurement samples delivered by the first sensing system S1 and samples of the prior estimation of the state of the system 100 provided by the second dead reckoning algorithm $ALG1_T$. As shown in Figure 3, the state "State - Tail" of the second dead reckoning algorithm $ALG1_T$ is periodically corrected (namely at the first frequency $F_1$) based on the fused output of the sensor fusion algorithm ALG2.

In accordance with the preferred embodiment shown in Figure 3, a specific buffer mechanism, including two buffer BU1, BU2, is implemented, along with a corresponding reset procedure as explained below.

In the illustration of Figure 3, the dead reckoning algorithm and its associated state are in effect duplicated. Both states "State - Tail" and "State - Head" are updated by the associated dead reckoning algorithm $ALG1_T$, respectively $ALG1_H$, by similarly integrating relative measurement samples from the second sensing system S2. When a new absolute measurement sample is available, it is fused by the sensor fusion algorithm ALG2 with the estimated system's state "State - Tail", it being appreciated that both are properly synchronized in time. The fused output of the sensor fusion algorithm ALG2 is used to refresh and correct the estimated system's state "State - Tail". After this correction is done, a procedure resets the "State - Head" to the newly estimated "State - Tail" (now at time $t - \Delta t + 1/F_1$) and re-applies all the relative measurements stored in the first buffer BU1 using the dead reckoning algorithm $ALG1_H$. Note that the first buffer BU1 contains only relative measurement samples from the second sensing system S2 acquired at time $t > t - \Delta t + 1/F_1$. After the reset procedure, the estimated system's state in "State - Head" is again aligned with the current time $t$, now taking into account the fused output of the sensor fusion algorithm ALG2 derived on the basis of the latest absolute measurement sample provided by the first sensing system S1.

In the illustration of Figure 3, one will appreciate that the first buffer BU1 stores all of the relative measurement samples from the second sensing system S2 for a duration corresponding to the sensor delay $\Delta t$, which ensures adequate synchronization of the measurement samples and provides memory for the reset mechanism described above. The second buffer BU2 is used to additionally store prior relative measurement samples from the second sensing system S2 between two successive absolute measurement samples from the first sensing system S1, for integration by the second dead reckoning algorithm $ALG1_T$. In the illustrated example, the second buffer BU2 is filled from the output of the first buffer BU1 during the reset procedure. One will appreciate that all measurement samples from the second buffer BU2 must be processed by the associated dead reckoning algorithm $ALG1_T$ before the next absolute measurement sample from the first sensing system S1 becomes available.

The sensor fusion principle depicted in Figure 3 accordingly provides a high frequency output of the estimated current state of the system 100, and this with minimal latency as the estimated system's state "State - Head" is constantly updated by integrating the relative measurement samples on top of the latest fused output delivered by the sensor fusion algorithm ALG2.

The proposed solution depicted in Figure 3 is designed specifically for minimal-latency output, while being able to handle delayed measurements and sensors that are sampled at different frequencies. The main advantages are:

- low latency output, i.e. less than the sampling period $1/F_2$ of the second sensing system S2;
- synchronization of the measurement samples between the first and second sensing systems S1, S2;
- low complexity (no back-prediction of state and covariances); and
- no need for a complex motion model; the relative measurement samples are considered as part of the system, not as measurements used to correct a motion model.

This however comes with some specific requirements and limitations:

- the low-latency output is based on pure dead reckoning for the duration of the sensor delay $\Delta t$, which may introduce some artifacts due to drift of the relative measurement samples;
- the maximum sensor delay $\Delta t$ is constrained by the processing power required to re-integrate all relative measurement samples stored in the first buffer BU1 within a time interval of $1/F_2$; failure to do so would increase the latency of the output;
- some extra memory is required to store a copy of the internal state "State - Tail";
- in the context of the use of a Kalman Filter for carrying out the sensor fusion algorithm, the state covariance matrix is only available with a delay $\Delta t$.

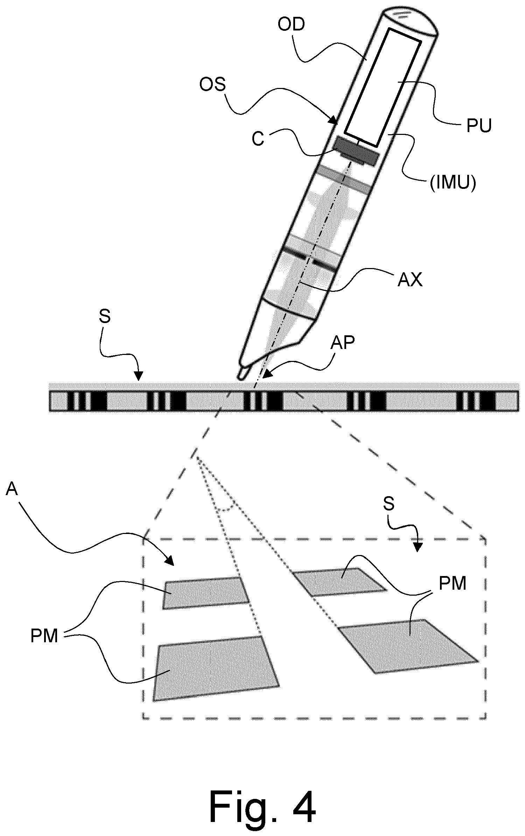

The invention can be implemented in various application scenarios, including but not limited to an application scenario relying on the use of an optical stylus device OD as shown in Figure 4. On may refer in that regard to the disclosure of International (PCT) Publication No. WO 2022/064412 A1, which is incorporated herein by reference in its entirety. The invention is however applicable more generally to any other application scenario requiring implementation of sensor fusion of asynchronous sensor data with minimal latency, including but not limited to inertial navigation systems for aircrafts, UAVs, autonomous or semi-autonomous vehicles, exploration robots, and the like.

The optical stylus device OD shown in Figure 4 essentially comprises an optical sensing system OS, acting as the aforementioned first sensing system S1 of Figure 3, including an optical sensor (also referred to as a camera) C that is aimed at a target surface S, and a dedicated processing system PU to process images acquired by the optical sensor C and provide an estimation of the pose of the optical stylus device OD with respect to the target surface S over which the optical stylus device OD is moved. In the illustrated example, the target surface S is provided with a plurality of positional markers PM, such as two-dimensional codes (including but not limited to data matrices), that are distributed over the target surface S e.g. in the form of an array A of individual, spaced-apart codes. The relevant positional markers PM shown schematically in Figure 4 encode data as to their position over the target surface S, and a selected subset of such positional markers PM, visible in the image acquired by the optical sensor C are processed, namely decoded, by the optical stylus device OD to estimate a pose thereof in space and, especially, a position in space of a tip of the optical stylus device OD. In effect, the optical stylus OD is not only capable of determining a position of the tip of the optical stylus device OD on the target surface S, but also over and at a distance from the target surface S. In other words, the optical stylus device OD may be used to capture movements and strokes in space performed by a user by means of the optical stylus device OD and convert those in 2D or 3D positional data for e.g. further processing in a computer environment. The optical stylus device OD can in particular be used to perform conversion of the user's handwriting or of any other shape or pattern drawn in space by the user by means of the optical stylus device OD.

In this particular context, estimation of the pose of the optical stylus device OD is commonly referred to as a Perspective-n-Point (PnP) problem involving an estimation of the pose in space of the optical sensor C (and thus of the optical positioning device OD) given a set of n points in space and their corresponding projections in the images acquired by the optical sensor C. Further aspects that are of relevance in that regard may be found in European patent application No. 23159950.7 of March 3, 2023 and related International (PCT) application No. PCT/IB2024/051989 of March 1, 2024, both titled "METHOD OF DETECTING AND PROCESSING SPATIALLY-DISTRIBUTED TWO-DIMENSIONAL MARKERS AND OPTICAL PEN OR STYLUS DEVICE EMBODYING THE SAME", in the name of the present Applicant.

In this application scenario, one will understand that the optical stylus device OD of Figure 4 further comprises an inertial measurement unit IMU that acts as the aforementioned second sensing system S2 of Figure 3. This inertial measurement unit IMU is configured to carry out inertial measurements and provide an estimation of a change in the pose of the optical stylus device OD during the time between two successive absolute measurements samples delivered by the optical sensing system OS.

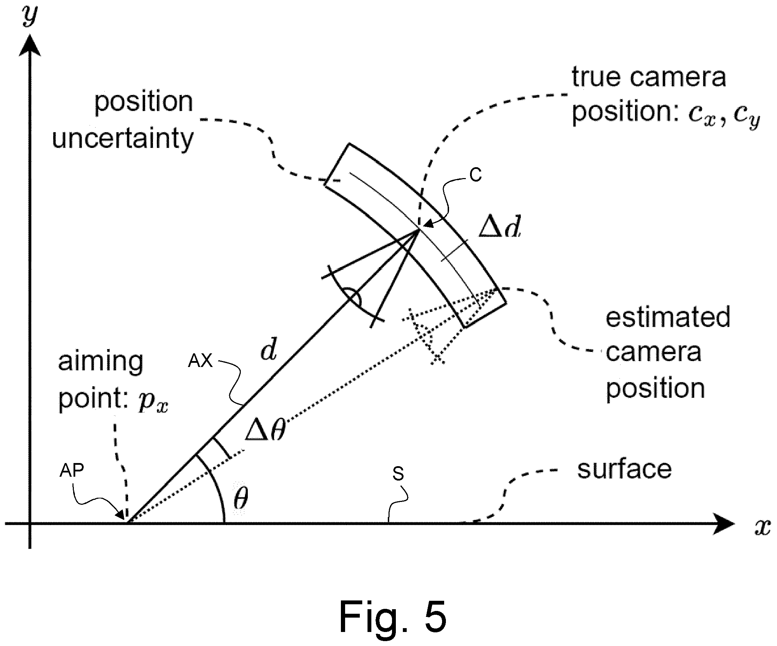

Figure 5 is a schematic diagram illustrating a measurement model for pose estimation of a camera C as preferably applied in the context of the optical stylus device OD of Figure 4. This aspect separately forms the subject-matter of copending European patent application No. 24161016.1 of March 1st, 2024, titled "METHOD OF ESTIMATING A POSE OF AN OPTICAL POSITIONING DEVICE, SUCH AS A DIGITAL PEN OR STYLUS DEVICE" in the name of the present Applicant.

In Figure 5, a simplified 2D model is shown for the sake of explanation, with the target surface S coinciding with the x axis, an aiming point AP of the camera C, along the optical axis AX thereof, being therefore assumed to be a given point with coordinate p, along the x axis, at the intersection with the optical axis AX of the camera C. In Figure 5, $\theta$ designates the true orientation of the optical axis AX of the camera C with respect to the target surface S, while $c_x$, $c_y$ designate the true position of the camera C in space. A single image acquired by the camera provides a reasonably accurate estimation of the aiming point AP of the camera C (e.g. determined to be the center of the acquired image), but the position and orientation of the camera C with respect to the target surface S is much more difficult to determine precisely.

Instead of estimating the position $c_x$, $c_y$ of the camera C, along with the orientation $\theta$ of the optical axis AX of the camera C, as is traditionally done, one preferably estimates (i) a position of the aiming point AP of the camera C on the target surface S along the optical axis AX of the camera C, (ii) the orientation $\theta$ of the optical axis AX of the camera C with respect to the target surface S, and (iii) the distance $d$ separating the aiming point AP and the camera C along the optical axis AX.

For the simplified 2D measurement model shown in Figure 5, the pose $\tilde{z}$ of the camera C can thus be expressed as follows:

$$\tilde{\mathbf{z}} = \mathbf{h}(\mathbf{x}, \eta_\theta, \eta_{px}, \eta_d) = \begin{bmatrix} \theta \\ p_x \\ d \end{bmatrix} + \begin{bmatrix} \eta_\theta \\ \eta_{px} \\ \eta_d \end{bmatrix} \qquad (1)$$

where x is the internal state of the system, and $\eta_\theta$, $\eta_{px}$, $\eta_d$ are the measurement noise terms on the true orientation $\theta$, coordinate $p_x$ of the aiming point AP and distance $d$, respectively.

An extension to the 3D space is trivial, by adding two more angles and a second coordinate $p_y$ for the position of the aiming point AP on the target surface S.

Thanks to this parametrization, measurements errors are entirely decorrelated. Indeed, an error on the estimated distance $d$ (due for example to a slightly wrong focal length) merely moves the estimated position of the camera C along the optical axis AX, and does not as such impact the estimation of the orientation $\theta$ of the optical axis AX or the estimation of the position of the aiming point AP along the optical axis AX. Similarly, an error on the estimation of the orientation $\theta$ of the optical axis AX basically moves the camera C on a circle (or sphere in 3D) centred around the aiming point AP and of radius $d$. Lastly, an error on the estimation of the position of the aiming point AP shifts the optical axis AX but does not impact the estimation of the orientation $\theta$ of the optical axis AX or the distance $d$.

The aforementioned measurement model is therefore particularly well suited for all applications of projective geometry as the position of the aiming point AP is easy to estimate from the acquired image (as being the point at the centre of the image). The other variables allow to express the position in space of the camera with respect to the aiming point. The variables being, by definition, independent, the relevant errors are entirely decorrelated, leading to simplification of the required computation for pose estimation. Furthermore, the noise model is comparatively more accurate than that of the measurement models that are traditionally used.

Let us consider the case of a Multiplicative Extended Kalman Filter (MEKF) for fusing image-based pose estimations with other sensor measurements (such as inertial measurements carried out by means on an inertial measurement unit), the general description of which can be found in "Optimal State Estimation: Kalman, H∞, and Nonlinear Approaches", D. Simon, Chapter 13 "Nonlinear Kalman filtering", pp. 395-431, John Wiley & Sons, Inc., 2006, ISBN: 978-0-471-70858-2 - https://doi.org/10.1002/0470045345.ch13 - referred herein as **[Simon2006].** Applying the measurement model discussed with reference to Figure 5, the Jacobian matrix **M,** including the derivatives of the measurement model function **h**() with respect to the relevant noise terms and $\eta_\theta$, $\eta_{px}$ and $\eta_d$ can be reduced to an identity matrix due to the decorrelated and additive measurement noise terms:

$$\mathbf{M} = \begin{bmatrix} \dfrac{\partial \mathbf{h}}{\partial \eta_\theta} & 0 & 0 \\ 0 & \dfrac{\partial \mathbf{h}}{\partial \eta_{px}} & 0 \\ 0 & 0 & \dfrac{\partial \mathbf{h}}{\partial \eta_d} \end{bmatrix} = \begin{bmatrix} 1 & 0 & 0 \\ 0 & 1 & 0 \\ 0 & 0 & 1 \end{bmatrix} \qquad (2)$$

The aforementioned measurement model therefore resolves any ambiguity between camera translation and orientations, one of the main challenges faced with the traditional measurement models.

Various modifications and/or improvements may be made to the above-described embodiments without departing from the scope of the invention as defined by the appended claims.

For instance, while the invention has been described in the particular context of an application scenario of an optical pen or stylus device, the invention is in effect applicable to the estimation of the state of any system relying on the use of sensor fusion of asynchronous sensor data.

The invention may in particular be applicable to any inertial navigation system or device that requires combination of asynchronous sensor data, which could find applications for navigation in aircrafts, UAVs, exploration robots, autonomous or semi-autonomous vehicles, and the like.

In addition, while sensor fusion has been presented in the particular context of the combination of sensor data from two sensing systems, one will appreciate that the invention may be implemented with a view to combine and fuse sensor data from more than two sensing systems.

LIST OF REFERENCE NUMERALS AND SIGNS USED THEREIN

| | |
|---|---|
| 100 | sensor fusion system (e.g. inertial navigation system) |
| S1 | (first) sensing system delivering absolute measurement samples (e.g. positioning or navigation system OS) |
| S2 | (second) sensing system delivering relative measurement samples (e.g. inertial measurement unit IMU) |
| OD | optical positioning device (e.g. digital pen/stylus device) / inertial navigation device |
| OS | positioning or navigation system, e.g. optical sensing system (first sensing system) |
| IMU | inertial measurement unit (second sensing system) |
| C | optical sensor / camera |
| PU | processing system |
| AX | optical axis of camera C |
| PM | positional markers (e.g. two-dimensional codes such as data matrices) |
| A | array of positional markers PM distributed over surface S |
| S | target surface over which optical positioning device OD is moved |
| AP | aiming point of optical sensing system OS on target surface S along optical axis AX |
| $p_x$ | coordinate of aiming point AP along x axis |
| $c_x$, $c_y$ | (true) position of camera C (in 2D space) |
| $\theta$ | (true) orientation of optical axis AX of camera C with respect to target surface S |
| $\Delta\theta$ | estimation error on orientation $\theta$ of optical axis AX camera C / difference between true orientation of optical axis AX of camera C and estimated orientation of optical axis AX of camera C |
| $d$ | distance separating aiming point AP and optical sensing system OS along optical axis AX |
| $\Delta d$ | estimation error on distance $d$ / difference between true distance along optical axis AX of camera C and estimated distance along optical axis AX of camera C |
| $F_1$ | (first) frequency at which the first sensing system S1 is operated to deliver absolute measurement samples |
| $F_2$ | (second) frequency at which the second sensing system S2 is operated to deliver relative measurement samples |
| $\Delta t$ | relative delay between absolute measurement samples and relative measurement samples (sensor delay) |
| BU | buffer for compensation of sensor delay $\Delta t$ |
| BU1 | (first) buffer for compensation of sensor delay $\Delta t$ |
| BU2 | (second) buffer periodically filled with relative measurement samples stored by (first) buffer BU1 |
| ALG | sensor fusion algorithm |
| ALG1 | dead reckoning algorithm for integration of relative measurement samples during time between successive absolute measurement samples |
| $\text{ALG1}_T$ | (first) dead reckoning algorithm for integration of relative measurement samples on top of estimated system's state at prior time $t - \Delta t$ (referred to as "State - Tail") |
| $\text{ALG1}_H$ | (second) dead reckoning algorithm for integration of relative measurement samples on top of estimated system's state at current time $t$ (referred to as "State - Head") |
| ALG2 | sensor fusion algorithm (e.g. Error-State Extended Kalman Filter - ES-EKF) |

**Claims**

1. A method of estimating a state of a system (100) based on sensor fusion of sensor data provided by a first sensing system (S1) delivering absolute measurement samples at a first frequency $F_1$ and sensor data provided by at least a second sensing system (S2) delivering relative measurement samples at a second frequency $F_2$ higher than the first frequency $F_1$,

   wherein the absolute measurement samples are delivered with a time delay $\Delta t$ relative to the relative measurement samples,
   wherein the method includes applying interrelated first and second dead reckoning algorithms ($\text{ALG1}_H$, $\text{ALG1}_T$) to integrate over time the relative measurement samples to respectively provide a current estimation and a prior estimation of the state of the system (100),
   wherein a state (State - Head) of the first dead reckoning algorithm ($\text{ALG1}_H$) represents the estimated state of the system (100) at a current time $t$, while a state (State- Tail) of the second dead reckoning algorithm ($\text{ALG1}_T$) represents the estimated state of the system (100) at a prior time $t - \Delta t$,

wherein sensor fusion is carried out by means of a sensor fusion algorithm (ALG2) that is executed at the first frequency $F_1$ based on the absolute measurement samples and samples of the prior estimation of the state of the system (100) provided by the second dead reckoning algorithm (ALG1$_T$),

and wherein the state (State - Tail) of the second dead reckoning algorithm (ALG1$_T$) is periodically corrected based on the fused output of the sensor fusion algorithm (ALG2) and used to periodically update the state (State - Head) of the first dead reckoning algorithm (ALG1$_H$).

2. The method according to claim 1, further including providing a first buffer (BU1) and feeding the relative measurement samples to the first buffer (BU1) to store buffered samples for a duration corresponding to the time delay $\Delta t$,

wherein the method further includes providing a second buffer (BU2) to additionally store relative measurement samples between two successive absolute measurement samples,

wherein the second dead reckoning algorithm (ALG1$_T$) integrates over time the relative measurement samples stored by the second buffer (BU2),

and wherein the method further includes triggering a reset procedure once the state (State - Tail) of the second dead reckoning algorithm (ALG1$_T$) has been corrected based on the fused output of the sensor fusion algorithm (ALG2), which reset procedure includes:

- resetting the state (State - Head) of the first dead reckoning algorithm (ALG1$_H$) to correspond to the corrected state (State- Tail) of the second dead reckoning algorithm (ALG1$_T$);
- filling the second buffer (BU2) with the buffered samples from the first buffer (BU1); and
- integrating the buffered samples stored by the first buffer (BU1) using the first dead reckoning algorithm (ALG1$_H$) to realign the state (State - Head) of the first dead reckoning algorithm (ALG1$_H$) to the current time $t$.

3. The method according to claim 1 or 2, wherein the sensor fusion algorithm (ALG2) is based on an Extended Kalman Filter (EKF).

4. The method according to any one of the preceding claims, wherein the first sensing system (S1) is a positioning or navigation system (OS) of a positioning or navigational device (OD) configured to determine an estimation of the pose and/or location of the positioning or navigational device (OD) within a surrounding environment,

and wherein the second sensing system (S2) is an inertial measurement unit (IMU) of the positioning or navigational device (OD) configured to carry out inertial measurements and provide an estimation of a change in the pose and/or location of the positioning or navigational device (OD),

the state (State - Head) of the first dead reckoning algorithm (ALG1$_H$) representing the estimated pose or location of the positioning or navigational device (OD) at the current time $t$.

5. The method according to claim 4, wherein the positioning or navigation system (OS) includes a geolocalization system, such as a satellite-based navigation system.

6. The method according to claim 4, wherein the positioning or navigation system is an optical sensing system (OS) of an optical positioning device (OD) configured to carry out optical measurements of the surrounding environment and provide an estimation of the pose of the optical positioning device (OD) within the surrounding environment based on the optical measurements carried out by the optical sensing system (OS),

and wherein the inertial measurement unit (IMU) is configured to provide an estimation of a change in the pose of the optical positioning device (OD),

the state (State - Head) of the first dead reckoning algorithm (ALG1$_H$) representing the estimated pose of the optical positioning device (OD) at the current time $t$.

7. The method according to claim 6, wherein the optical sensing system (OS) includes an optical sensor (C) aimed at a target surface (S), the method including determining an estimation of a pose of the optical sensor (C) with respect to the target surface (S) based on the optical measurements carried out by the optical sensing system (OS) and providing a corresponding estimation of the pose of the optical positioning device (OD) based at least in part on the estimation of the pose of the optical sensor (C).

8. The method according to claim 7, wherein the estimation of the pose of the optical sensor (C) includes estimating positional parameters (AP, $\theta$, $d$) of the optical sensor (C) that have entirely decorrelated measurement noise terms, namely:

(i) a position of an aiming point (AP) of the optical sensor (C) on the target surface (S) along an optical axis (AX) of the optical sensor (C);
(ii) an orientation ($\theta$) of the optical axis (AX) of the optical sensor (C) with respect to the target surface (S); and
(iii) a distance ($d$) separating the aiming point (AP) and the optical sensor (C) along the optical axis (AX).

9. The method according to claim 7 or 8, wherein the target surface (S) is provided with positional markers (PM) that are visible to the optical sensing system (OS) and wherein the estimation of the pose of the optical sensor (C) with respect to the target surface (S) is determined by running a Perspective-$n$-Point (P$n$P) algorithm based on images acquired by the optical sensor (C).

10. The method according to any one of claims 4 to 9, applied for the purpose of estimating the current pose and/or location of an inertial navigation device.

11. The method according to any one of claims 6 to 9, applied for the purpose of estimating the current pose of a digital pen or stylus device (OD).

12. An inertial navigation device comprising a navigation system (S1) configured to determine an estimation of the pose and/or location of the inertial navigation device within a surrounding environment,

wherein the inertial navigation device further comprises an inertial measurement unit (S2) configured to carry out inertial measurements and provide an estimation of a change in the pose and/or location of the inertial navigation device,
wherein the inertial navigation device further comprises a processing system configured to estimate the pose and/or location of the inertial navigation device in accordance with the method of any one of claims 4 to 9.

13. A digital pen or stylus device (OD) comprising an optical sensing system (OS) configured to acquire images of at least a portion of a target surface (S) over which the digital pen or stylus device (OD) is moved, the target surface (S) being provided with a plurality of positional markers (PM) that are distributed over the target surface (S),

wherein the digital pen or stylus device (OD) further comprises an inertial measurement unit (IMU) configured to carry out inertial measurements and provide an estimation of a change in the pose of the digital pen or stylus device (OD),
wherein the digital pen or stylus device (OD) further comprises a processing system (PU) configured to estimate the pose of the digital pen or stylus device (OD) in accordance with the method of any one of claims 6 to 9.

Fig. 1

Fig. 2

Fig. 3

# Fig. 4

Fig. 5

EP 4 610 595 A1

Europäisches
Patentamt

European
Patent Office

Office européen
des brevets

# EUROPEAN SEARCH REPORT

**Application Number**

EP 24 16 1026

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/097862 A1 (YIM HYUN GU [KR]) 7 April 2016 (2016-04-07) * paragraphs [0040], [0041], [0053]; figures 1,2 * | 1-13 | INV. G01C21/16 G06F3/03 |
| A | ZHUXIN DONG ET AL: "Î1?4IMU-based handwriting recognition calibration by optical tracking", ROBOTICS AND BIOMIMETICS, 2007. ROBIO 2007. IEEE INTERNATIONAL CONFERENCE ON, IEEE, PISCATAWAY, NJ, USA, 15 December 2007 (2007-12-15), pages 382-387, XP031252834, ISBN: 978-1-4244-1761-2 * paragraph [00II] * | 11 | |

**TECHNICAL FIELDS SEARCHED (IPC)**

G01C
G06F

The present search report has been drawn up for all claims

| Place of search | Date of completion of the search | Examiner |
|---|---|---|
| The Hague | 11 September 2024 | Asthalter, Tanja |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 1026

This annex lists the patent family members relating to the patent documents cited in the above-mentioned European search report.
The members are as contained in the European Patent Office EDP file on
The European Patent Office is in no way liable for these particulars which are merely given for the purpose of information.

11-09-2024

| Patent document cited in search report | Publication date | Patent family member(s) | | Publication date |
|---|---|---|---|---|
| US 2016097862 A1 | 07-04-2016 | CN | 105698787 A | 22-06-2016 |
| | | KR | 20160040867 A | 15-04-2016 |
| | | US | 2016097862 A1 | 07-04-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022064412 A1
- EP 23159950
- WO IB2024051989 A
- EP 24161016

**Non-patent literature cited in the description**

- **PETER L. ROTHMAN et al.** Fusion or confusion: knowledge or nonsense. *Proceedings of the SPIE*, August 1991, vol. 1470, 2-12, https://doi.org/-doi:10.1117/12.44835
- **YAAKOV BAR-SHALOM**. Update with Out-of-Sequence Measurements in Tracking: Exact Solution. *IEEE Transactions on Aerospace and Electronic Systems*, July 2002, vol. 38 (3), 769-777, https://doi.org/10.1 109/TAES.2002.1039398
- **MAHENDRA MALLICK et al.** Advances in Asynchronous and Decentralized Estimation. *2001 IEEE Aerospace Conference Proceedings*, 10 March 2001, vol. 4, 1873-1888, https://doi.org/10.1109/AERO.2001.931505
- Optimal State Estimation: Kalman, H∞, and Nonlinear Approaches. **D. SIMON**. Nonlinear Kalman filtering. John Wiley & Sons, Inc., 2006, 395-431